# EUROPEAN PATENT APPLICATION

(11) **EP 1 956 320 A1**
(43) Date of publication of application: **13.08.2008**
(21) Application number: 06833590.0
(22) Date of filing: 29.11.2006
(51) Int. Cl.: F25B 1/10, F25B 1/00

(54) **FREEZING DEVICE**

(30) Priority: 30.11.2005 JP 2005345643
(71) Applicant: DAIKIN INDUSTRIES, LTD., Osaka-shi, Osaka 530-8323 (JP)
(72) Inventor: FUJIMOTO, Shuuji, DAIKIN INDUSTRIES, LTD., Sakai-shi, Osaka 5918511 (JP); YOSHIMI, Atsushi, DAIKIN INDUSTRIES, LTD., Sakai-shi, Osaka 5918511 (JP); YAMAGUCHI, Takahiro, DAIKIN INDUSTRIES, LTD., Sakai-shi, Osaka 5918511 (JP)
(74) Representative: HOFFMANN EITLE
(86) International application number: PCT/JP2006/323786
(87) International publication number: WO 2007/063883

(57) **Abstract**

A refrigeration system **(10)** includes: a refrigerant circuit **(15)** including a low-pressure stage compressor **(21)** variable in displacement and a high-pressure stage compressor **(31)** variable in displacement and operating in a two-stage compression refrigeration cycle; and a controller **(100)** for controlling the operation of the refrigeration system **(10).** The controller **(100)** includes a first control section **(101)** and a second control section **(102).** The first control section **(101)** controls the operating capacity of the low-pressure stage compressor **(21)** to adapt to the load of the refrigeration capacity. The second control section **(102)** controls the operating capacity of the high-pressure stage compressor **(31)** so that the ratio between a first pressure ratio, which is the ratio of the discharge pressure of the low-pressure stage compressor **(21)** to the suction pressure thereof, and a second pressure ratio, which is the ratio of the discharge pressure of the high-pressure stage compressor **(31)** to the suction pressure thereof, is 1:1.

## Description

### Technical Field

This invention relates to refrigeration systems including a refrigerant circuit including two compression mechanisms and operating in a two-stage compression refrigeration cycle, and particularly relates to control on the operating capacities of the compression mechanisms.

### Background Art

Refrigeration systems are conventionally known that include two compression mechanisms to operate in a two-stage compression refrigeration cycle for refrigerant (see, for example, Patent Document 1).

The refrigeration system disclosed in Patent Document 1 is an air conditioning system and includes an outdoor unit, an indoor unit and a power-up unit for use in increasing the power by performing a two-stage compression mainly during a heating operation. The outdoor unit includes an outdoor expansion valve, an outdoor heat exchanger and a low-pressure stage compressor serving as a main compression mechanism. The indoor unit includes an indoor heat exchanger and an indoor expansion valve. The power-up unit includes a high-pressure stage compressor serving as an auxiliary compression mechanism, a gas expansion valve provided in a gas line, a liquid expansion valve provided in a liquid line, and an intermediate cooler.

During a heating operation, refrigerant discharged from the high-pressure stage compressor in the power-up unit exchanges heat with room air at the indoor heat exchanger to condense or liquefy and thereby heat the room air. The liquid refrigerant obtained by condensation is reduced to an intermediate pressure by the liquid expansion valve and then flows into the intermediate cooler to cool refrigerant flowing from the low-pressure stage compressor towards the high-pressure stage compressor. Thereafter, the refrigerant is reduced in pressure by the outdoor expansion valve and then evaporates in the outdoor heat exchanger. Then, the evaporated refrigerant is sucked into the low-pressure stage compressor. The refrigerant compressed by the low-pressure stage compressor is pumped into the power-up unit, flows through the gas expansion valve, is then cooled in the intermediate cooler by liquid refrigerant coming from the indoor heat exchanger and then flows into the high-pressure stage compressor. The air conditioning system increases the heating power by performing a two-stage compression in the above manner. Patent Document 1: Published Japanese Patent Application No. 2001-56156

### Disclosure of the Invention

### Problem to Be Solved by the Invention

In the refrigeration system disclosed in Patent Document 1, however, no consideration is given to how to individually control the operating capacities of the two compression mechanisms compressing refrigerant in two stages during operation in a two-stage compression refrigeration cycle. Therefore, it is hard to say that the known refrigeration system actually controls the compression appropriately according to the operating conditions.

The present invention has been made in view of the foregoing point and, therefore, an object thereof is that the refrigeration system including a refrigerant circuit operating in a two-stage compression refrigeration cycle performs an operation appropriate to the operating conditions by individually controlling the operating capacities of the compression mechanisms.

### Means to Solve the Problem

A first aspect of the invention is a refrigeration system that includes a refrigerant circuit **(15)** including a first compression mechanism **(21, 31)** variable in displacement and a second compression mechanism **(31, 21)** variable in displacement, operates in a two-stage compression refrigeration cycle, and further includes: a first control means **(101)** for increasing and decreasing the operating capacity of the first compression mechanism **(21, 31)** to adapt to the load of the refrigeration capacity; and a second control means **(102)** for increasing and decreasing the operating capacity of the second compression mechanism **(31, 21)** so that the intermediate pressure in the two-stage compression refrigeration cycle has a predetermined value.

In the first aspect of the invention, since the first control means **(101)** controls the operating capacity of the first compression mechanism **(21, 31),** the refrigeration system performs an operation with power appropriate to the load of the refrigeration capacity. Furthermore, in this aspect of the invention, since the second control means **(102)** controls the operating capacity of the second compression mechanism **(31, 21),** this provides an appropriate control on the intermediate pressure. By individually controlling the compression mechanisms **(21, 31)** in the above manners, the refrigeration system performs an operation appropriate to the operating conditions.

A second aspect of the invention is the refrigeration system according to the first aspect of the invention, wherein the second control means **(102)** controls the operating capacity of the second compression mechanism **(31, 21)** so that the ratio between a first pressure ratio, which is the ratio of the discharge pressure of the first compression mechanism **(21, 31)** to the suction pressure thereof, and a second pressure ratio, which is the ratio of the discharge pressure of the second compression mechanism **(31, 21)** to the suction pressure thereof, is 1:1.

In the second aspect of the invention, since the second control means **(102)** controls the second compression mechanism so that the ratio between the first and second pressure ratios is 1:1, the COP is enhanced. Specifically, if the pressure ratio between the compression mechanisms **(21, 31)** increases, the COP decreases. Therefore, the ratio of the high pressure (PH) to the low pressure (PL) in the two-stage compression refrigeration cycle is divided equally between the two compression mechanisms **(21, 31),** thereby maximizing the COP. Furthermore, in the second aspect of the invention, the predetermined value of the intermediate pressure in the first aspect of the invention is the geometric mean {(PL·PH)^{1/2}} of the low pressure (PL) and the high pressure (PH) in the two-stage compression refrigeration cycle.

A third aspect of the invention is the refrigeration system according to the first aspect of the invention, wherein the refrigeration system further includes a third control means **(103)** that, at startup, controls the operating capacity of the second compression mechanism **(31, 21)** instead of the second control means **(102)** so that the second compression mechanism **(31, 21)** has a predetermined target operating capacity derived based on the operating capacity of the first compression mechanism **(21, 31).**

In the third aspect of the invention, at startup, the third control means **(103)** controls the operating capacity of the second compression mechanism **(31, 21)** so that the second compression mechanism **(31, 21)** has a predetermined target operating capacity derived from the operating capacity of the first compression mechanism **(21, 31),** thereby promptly providing an operation adapted to the load of the refrigeration capacity at startup. The predetermined target operating capacity is, for example, n times (for example, n=1.3) as large as the operating capacity of the first compression mechanism **(21, 31).** Specifically, the second control means **(102)** may make a feedback control of controlling the operating capacity of the second compression mechanism **(31, 21)** after the control of the first control means **(101)** on the operating capacity of the first compression mechanism **(21, 31).** If in this case the second control means **(102)** controls the operating capacity of the second compression mechanism **(31, 21)** at startup, a delay due to the feedback control may occur to deteriorate the operating power. To cope with this, at startup, the third control means **(103)** controls the second compression mechanism **(31, 21)** to enhance the rising characteristic of the operating power at startup.

A fourth aspect of the invention is the refrigeration system according to the first aspect of the invention, wherein during a heating operation, the first compression mechanism **(21, 31)** comprises a low-pressure stage compression mechanism **(21)** and the second compression mechanism **(31, 21)** comprises a high-pressure stage compression mechanism **(31).** Furthermore, during the heating operation, the first control means **(101)** controls the operating capacity of the low-pressure stage compression mechanism **(21)** so that the discharge pressure of the high-pressure stage compression mechanism **(31)** has a predetermined target value while the second control means **(102)** controls the operating capacity of the high-pressure stage compression mechanism **(31)** so that the intermediate pressure has a predetermined value.

In the fourth aspect of the invention, during the heating operation, the first control means **(101)** controls the operating capacity of the low-pressure stage compression mechanism **(21)** so that the discharge pressure of the high-pressure stage compression mechanism **(31)** becomes a pressure corresponding to a target condensation pressure.

There is the case where an option unit **(30)** including the high-pressure stage compression mechanism **(31)** is connected to a refrigeration system including the low-pressure stage compression mechanism **(21)** and operating in a single-stage compression refrigeration cycle to provide a refrigeration system operating in a two-stage compression refrigeration cycle. In the single-stage compression refrigeration cycle using no option unit **(30),** the operating capacity of the low-pressure stage compression mechanism **(21)** is controlled to provide an operating power control according to the heating load that is the load of the refrigeration capacity. Also in the two-stage compression refrigeration cycle, the operating power control based on the control on the operating capacity of the low-pressure stage compression mechanism **(21)** in the single-stage compression refrigeration cycle is applied as it is. In other words, in each of the single-stage and two-stage compression refrigeration cycles, the first control means **(101)** controls the operating capacity of the low-pressure stage compression mechanism **(21)** to provide an operation adapted to the heating load.

A fifth aspect of the invention is the refrigeration system according to the first aspect of the invention, wherein during a cooling operation, the first compression mechanism **(21, 31)** comprises a high-pressure stage compression mechanism and the second compression mechanism **(31, 21)** comprises a low-pressure stage compression mechanism. Furthermore, during the cooling operation, the first control means **(101)** controls the operating capacity of the high-pressure stage compression mechanism **(31)** so that the suction pressure of the low-pressure stage compression mechanism **(21)** has a predetermined target value while the second control means **(102)** controls the operating capacity of the low-pressure stage compression mechanism **(21)** so that the intermediate pressure has a predetermined value.

In the fifth aspect of the invention, during the cooling operation, the first control means **(101)** controls the operating capacity of the high-pressure stage compression mechanism **(31)** so that the suction pressure of the low-pressure stage compression mechanism **(21)** becomes a pressure corresponding to a target evaporation pressure.

There is the case where an option unit **(30)** including the low-pressure stage compression mechanism **(21)** is connected to a refrigeration system including the high-pressure stage compression mechanism **(31)** and operating in a single-stage compression refrigeration cycle to provide a refrigeration system operating in a two-stage compression refrigeration cycle. In the single-stage compression refrigeration cycle using no option unit **(30),** the operating capacity of the high-pressure stage compression mechanism **(31)** is controlled to provide an operating power control according to the cooling load that is the load of the refrigeration capacity. Also in the two-stage compression refrigeration cycle, the operating power control based on the control on the operating capacity of the high-pressure stage compression mechanism **(31)** in the single-stage compression refrigeration cycle is applied as it is. In other words, in each of the single-stage and two-stage compression refrigeration cycles, the first control means **(101)** controls the operating capacity of the high-pressure stage compression mechanism **(31)** to provide an operation adapted to the cooling load.

A sixth aspect of the invention is the refrigeration system according to the first aspect of the invention, wherein the first compression mechanism **(21, 31)** and the second compression mechanism **(31, 21)** are inverter-controlled.

In the sixth aspect of the invention, the capacities of the first compression mechanism **(21, 31)** and second compression mechanism **(31, 21)** are easily controlled.

### Effects of the Invention

According to the first aspect of the invention, since the first control means **(101)** and the second control means **(102)** individually control their respective compression mechanisms **(21, 31),** the refrigeration system can perform an operation appropriate to the operating conditions.

According to the second aspect of the invention, since the second control means **(102)** controls the second compression mechanism so that the ratio between the first and second pressure ratios is 1:1, this provides the highest COP.

According to the third aspect of the invention, since at startup the third control means **(103)** controls the operating capacity of the second compression mechanism **(31, 21)** so that the second compression mechanism **(31, 21)** has a predetermined target operating capacity derived from the operating capacity of the first compression mechanism **(21, 31),** an operation adapted to the load of the refrigeration capacity can be promptly carried out. In this case, the predetermined target operating capacity is, for example, n times (for example, n=1.3) as large as the operating capacity of the first compression mechanism **(21, 31).** Thus, even with a system configuration in which the first control means **(101)** first controls the operating capacity of the first compression mechanism **(21, 31)** and the second control means **(102)** then makes a feedback control of controlling the operating capacity of the second compression mechanism **(31, 21)** based on the operating capacity of the first compression mechanism **(21, 31),** the rising characteristic of the operating power at startup can be enhanced.

According to the fourth aspect of the invention, since during the heating operation the first control means **(101)** controls the operating capacity of the low-pressure stage compression mechanism **(21)** so that the discharge pressure of the high-pressure stage compression mechanism **(31)** has a predetermined target value, the operating capacity of the low-pressure stage compression mechanism **(21)** can be controlled so that the discharge pressure of the high-pressure stage compression mechanism **(31)** has a pressure value corresponding to a condensation pressure for a target condensation temperature, thereby adapting the operation to the heating load that is the load of the refrigeration capacity.

Furthermore, there is the case where an option unit **(30)** including the high-pressure stage compression mechanism **(31)** is connected to a refrigeration system including the low-pressure stage compression mechanism **(21)** and operating in a single-stage compression refrigeration cycle to provide a refrigeration system operating in a two-stage compression refrigeration cycle. In the single-stage compression refrigeration cycle using no option unit **(30),** the operating capacity of the low-pressure stage compression mechanism **(21)** is controlled to provide an operating power control according to the heating load that is the load of the refrigeration capacity. Also in the two-stage compression refrigeration cycle, the operating power control based on the control on the operating capacity of the low-pressure stage compression mechanism **(21)** in the single-stage compression refrigeration cycle is applied as it is. In other words, in each of the single-stage and two-stage compression refrigeration cycles, the first control means **(101)** controls the operating capacity of the low-pressure stage compression mechanism **(21)** to provide an operation adapted to the heating load. Therefore, the configuration of the control means can be simplified.

According to the fifth aspect of the invention, since during the cooling operation the first control means **(101)** controls the operating capacity of the high-pressure stage compression mechanism **(31)** so that the suction pressure of the low-pressure stage compression mechanism **(21)** has a predetermined target value, the operating capacity of the high-pressure stage compression mechanism **(31)** can be controlled so that the suction pressure of the low-pressure stage compression mechanism **(21)** has a pressure value corresponding to an evaporation pressure for a target evaporation temperature, thereby adapting the operation to the cooling load that is the load of the refrigeration capacity.

Furthermore, there is the case where an option unit **(30)** including the low-pressure stage compression mechanism **(21)** is connected to a refrigeration system including the high-pressure stage compression mechanism **(31)** and operating in a single-stage compression refrigeration cycle to provide a refrigeration system operating in a two-stage compression refrigeration cycle. In the single-stage compression refrigeration cycle using no option unit **(30),** the operating capacity of the high-pressure stage compression mechanism **(31)** is controlled to provide an operating power control according to the cooling load that is the load of the refrigeration capacity. Also in the two-stage compression refrigeration cycle, the operating power control based on the control on the operating capacity of the high-pressure stage compression mechanism **(31)** in the single-stage compression refrigeration cycle is applied as it is. In other words, in each of the single-stage and two-stage compression refrigeration cycles, the first control means **(101)** controls the operating capacity of the high-pressure stage compression mechanism **(31)** to provide an operation adapted to the cooling load. Therefore, the configuration of the control means can be simplified.

According to the sixth aspect of the invention, since the first compression mechanism **(21, 31)** and the second compression mechanism **(31, 21)** are inverter-controlled, the capacities of the first compression mechanism **(21, 31)** and second compression mechanism **(31, 21)** can be easily controlled.

### Brief Description of Drawings

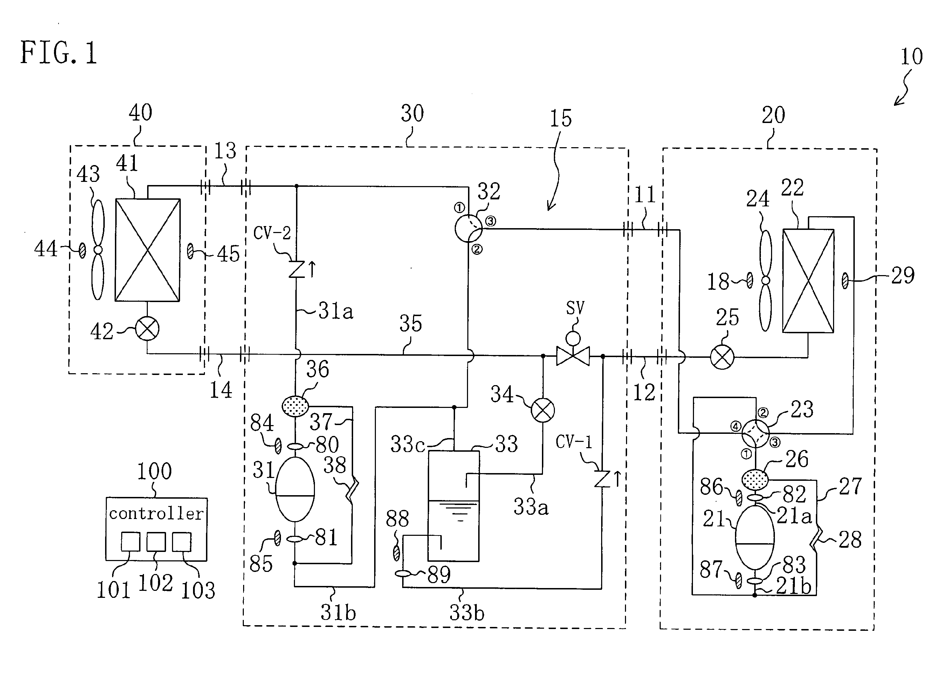

[Fig. 1] conditioning system according to Embodiment 1.
Figure **1** is a piping diagram showing a refrigerant circuit of an air
[Fig. 2] Figure **2** is a piping diagram showing a refrigerant flow in the air conditioning system according to Embodiment 1 during a cooling operation.
[Fig. 3] Figure **3** is a piping diagram showing a refrigerant flow in the air conditioning system according to Embodiment 1 during a heating operation in a single-stage compression refrigeration cycle.
[Fig. 4] Figure **4** is a piping diagram showing a refrigerant flow in the air conditioning system according to Embodiment 1 during a heating operation in a two-stage compression refrigeration cycle.
[Fig. 5] Figure **5** is flow charts showing controls on the operating frequencies of a low-pressure stage compressor and a high-pressure stage compressor in the air conditioning system according to Embodiment 1.
[Fig. 6] Figure **6** is a piping diagram showing a refrigerant circuit of a refrigeration system according to Embodiment 2.
[Fig. 7] Figure **7** is a piping diagram showing a refrigerant flow in the refrigeration system according to Embodiment 2 during a cooling operation in a single-stage compression refrigeration cycle.
[Fig. 8] Figure **8** is a piping diagram showing a refrigerant flow in the refrigeration system according to Embodiment 2 during a cooling operation in a two-stage compression refrigeration cycle.
[Fig. 9] Figure **9** is flow charts showing controls on the operating frequencies of a low-pressure stage compressor and a high-pressure stage compressor in the refrigeration system according to Embodiment 2.

### List of Reference Numerals

- **10**: air conditioning system (refrigeration system)
- **15**: refrigerant circuit
- **21**: low-pressure stage compressor (first compression mechanism, second compression mechanism)
- **31**: high-pressure stage compressor (first compression mechanism, second compression mechanism)
- **101**: first control section (first control means)
- **102**: second control section (second control means)
- **103**: third control section (third control means)
- **120**: refrigeration system

### Best Mode for Carrying Out the Invention

Embodiments of the present invention will be described below in detail with reference to the drawings.

### «Embodiment 1 of the Invention»

Embodiment 1 of the present invention is, as shown in Figure 1, a heat pump air conditioning system **(10)** capable of a cooling operation and a heating operation. The air conditioning system **(10)** includes an outdoor unit **(20)** placed outdoors, an option unit **(30)** constituting an expansion unit, an indoor unit **(40)** placed in a room, and a controller **(100)** for controlling the operation of the air conditioning system **(10).** The outdoor unit **(20)** is connected via a first connection pipe **(11)** and a second connection pipe **(12)** to the option unit **(30).** The indoor unit **(40)** is connected via a third connection pipe **(13)** and a fourth connection pipe **(14)** to the option unit **(30).** Thus, in the air conditioning system **(10),** a refrigerant circuit **(15)** operating in a vapor compression refrigeration cycle by circulating refrigerant therethrough is constituted.

The option unit **(30)** constitutes a power-up unit for an existing separate-type air conditioning system. Specifically, in the existing air conditioning system, a refrigerant circuit including the outdoor unit **(20)** and the indoor unit **(40)** performs cooling and heating operations in a single-stage compression refrigeration cycle. When the option unit **(30)** is additionally connected between the outdoor unit **(20)** and the indoor unit **(40),** the refrigerant circuit can perform a heating operation in a two-stage compression refrigeration cycle.

### <Outdoor Unit>

The outdoor unit **(20)** includes a low-pressure stage compressor **(21),** an outdoor heat exchanger **(22),** an outdoor expansion valve **(25)** and a four-way selector valve **(23).**

The low-pressure stage compressor **(21)** is a scroll compressor and is configured to be supplied with power through an inverter to change its operating frequency and specifically to change the rotational speed of the compressor motor by changing the output frequency of the inverter. In other words, the low-pressure stage compressor **(21)** is constituted as a first compression mechanism variable in displacement by controlling the inverter.

The outdoor heat exchanger **(22)** is constituted by a cross-fin-and-tube heat exchanger. Disposed close to the outdoor heat exchanger **(22)** is an outdoor fan **(24).** The outdoor fan **(24)** delivers outdoor air to the outdoor heat exchanger **(22).** The outdoor expansion valve **(25)** is composed of an electronic expansion valve controllable in opening.

The four-way selector valve **(23)** has first to fourth ports. The first port of the four-way selector valve **(23)** is connected to a discharge pipe **(21a)** of the low-pressure stage compressor **(21)** and the second port thereof is connected to a suction pipe **(21b)** of the low-pressure stage compressor **(21).** Furthermore, the third port of the four-way selector valve **(23)** is connected via the outdoor heat exchanger **(22)** and the outdoor expansion valve **(25)** to one end of the second connection pipe **(12)** and the fourth port thereof is connected to one end of the first connection pipe **(11).** The four-way selector valve **(23)** is configured to be switchable between a first position (the position shown in the solid lines in Figure **1****)** in which the first port is communicated with the fourth port and the second port is communicated with the third port and a second position (the position shown in the broken lines in Figure **1****)** in which the first port is communicated with the third port and the second port is communicated with the fourth port.

The discharge pipe **(21a)** of the low-pressure stage compressor **(21)** is provided with a low-pressure stage oil separator **(26).** The low-pressure stage oil separator **(26)** is connected to one end of a first oil return pipe **(27).** The other end of the first oil return pipe **(27)** is connected to the suction pipe **(21b)** of the low-pressure stage compressor **(21).** The first oil return pipe **(27)** is provided with a first capillary tube **(28).** Thus, refrigerating machine oil separated by the low-pressure stage oil separator **(26)** is reduced in pressure during flow through the first oil return pipe **(27)** and then returned to the low-pressure stage compressor **(21).**

Furthermore, the outdoor unit **(20)** is provided with various sensors. Specifically, the discharge pipe **(21a)** of the low-pressure stage compressor **(21)** is provided with a discharge pressure sensor **(82)** and a discharge temperature sensor **(86)** and the suction pipe **(21b)** thereof is provided with a suction pressure sensor **(83)** and a suction temperature sensor **(87).** The outdoor unit **(20)** is also provided with an outdoor temperature sensor **(18)** and a refrigerant temperature sensor **(29)** for the outdoor heat exchanger **(22).**

### <Option Unit>

The option unit **(30)** includes a high-pressure stage compressor **(31),** a three-way selector valve **(32),** a gas-liquid separator **(33)** and an option side expansion valve **(34).**

The high-pressure stage compressor **(31)** is a scroll compressor and is configured to be supplied with power through an inverter to change its operating frequency and specifically to change the rotational speed of the compressor motor by changing the output frequency of the inverter. In other words, the high-pressure stage compressor **(31)** is constituted as a second compression mechanism variable in displacement by controlling the inverter.

The three-way selector valve **(32)** has first to third ports. The first port of the three-way selector valve **(32)** is connected to a discharge pipe **(31a)** of the high-pressure stage compressor **(31).** One end of the third connection pipe **(13)** is connected halfway along the discharge pipe **(31a).** The second port of the three-way selector valve **(32)** is connected to a suction pipe **(31b)** of the high-pressure stage compressor **(31)** and the third port thereof is connected to the other end of the first connection pipe **(11).** The three-way selector valve **(32)** is configured to be switchable between a first position (the position shown in the solid line in Figure **1****)** in which the second port is communicated with the third port and a second position (the position shown in the broken line in Figure **1****)** in which the first port is communicated with the third port.

The gas-liquid separator **(33)** is for the purpose of separating refrigerant in a gas-liquid two-phase state into liquid refrigerant and gas refrigerant. Specifically, the gas-liquid separator **(33)** is formed of a cylindrical hermetic vessel and includes a liquid refrigerant reservoir formed in a lower part thereof and a gas refrigerant reservoir formed above the liquid refrigerant reservoir. The gas-liquid separator **(33)** is connected to a liquid inflow pipe **(33a)** passing through the sidewall thereof and opening into the gas refrigerant reservoir and a liquid outflow pipe **(33b)** passing through the sidewall thereof and opening into the liquid refrigerant reservoir. The gas-liquid separator **(33)** is also connected to a gas outflow pipe **(33c)** passing through the top thereof and opening into the gas refrigerant reservoir.

The inflow end of the liquid inflow pipe **(33a)** and the outflow end of the liquid outflow pipe **(33b)** are connected halfway along a main pipe **(35)** extending from one end of the fourth connection pipe **(14)** to the other end of the second connection pipe **(12)** in order from the fourth connection pipe **(14).** The liquid inflow pipe **(33a)** is provided with the option side expansion valve **(34).** The option side expansion valve **(34)** is composed of an electronic expansion valve controllable in opening. The outflow end of the gas outflow pipe **(33c)** is connected halfway along the suction pipe (31b) of the high-pressure stage compressor **(31).**

The option unit **(30)** also includes a high-pressure stage oil separator **(36)** disposed in the discharge pipe **(31a)** of the high-pressure stage compressor **(31).** The high-pressure stage oil separator **(36)** is connected to one end of a second oil return pipe **(37).** The other end of the second oil return pipe **(37)** is connected between the connecting part of the suction pipe **(31b)** of the high-pressure stage compressor **(31)** with the gas outflow pipe **(33c)** and the high-pressure stage compressor **(31).** The second oil return pipe **(37)** is also connected to a second capillary tube **(38).** Thus, refrigerating machine oil separated by the high-pressure stage oil separator **(36)** is reduced in pressure during flow through the second oil return pipe **(37)** and then returned to the high-pressure stage compressor **(31).**

The option unit **(30)** also includes a solenoid valve for selectively opening and closing the flow path and check valves for restricting the refrigerant flow. Specifically, the main pipe **(35)** has a solenoid valve **(SV)** disposed between the connecting part with the liquid inflow pipe **(33a)** and the connecting part with the liquid outflow pipe **(33b).** Furthermore, the liquid outflow pipe **(33b)** is provided with a first check valve **(CV-1)** and the discharge pipe **(31a)** of the high-pressure stage compressor **(31)** is provided with a second check valve **(CV-2).** Each of the first and second check valves **(CV-1, CV-2)** allows only a refrigerant flow in the direction shown in the arrow in Figure **1****.**

Furthermore, the option unit **(30)** is provided with various sensors. Specifically, the discharge pipe **(31a)** of the high-pressure stage compressor **(31)** is provided with a discharge pressure sensor **(80)** and a discharge temperature sensor **(84)** and the suction pipe **(31b)** thereof is provided with a suction pressure sensor **(81)** and a suction temperature sensor **(85).** The liquid outflow pipe **(33b)** of the gas-liquid separator **(33)** is provided with a temperature sensor **(88)** and a pressure sensor **(89).**

### <Indoor Unit>

The indoor unit **(40)** includes an indoor heat exchanger **(41)** and an indoor expansion valve **(42).** The indoor heat exchanger **(41)** is constituted by a cross-fin-and-tube heat exchanger. Disposed close to the indoor heat exchanger **(41)** is an indoor fan **(43).** The indoor fan **(43)** delivers room air to the indoor heat exchanger **(41).** The indoor expansion valve **(42)** is composed of an electronic expansion valve controllable in opening.

In the indoor unit **(40),** the other end of the third connection pipe **(13)** is connected via the indoor heat exchanger **(41)** and the indoor expansion valve **(42)** to the other end of the fourth connection pipe **(14).**

The indoor unit **(40)** is also provided with a room temperature sensor **(44)** and a refrigerant temperature sensor **(45)** for the indoor heat exchanger **(41).**

### <Controller>

The controller **(100)** is used for controlling the operational behavior of the air conditioning system **(10)** by changing the positions of the various valves disposed in the refrigerant circuit **(15)** and controlling the openings thereof. The controller **(100)** includes a first control section **(101),** a second control section **(102)** and a third control section **(103).** The first control section **(101)** inverter-controls the operating frequency of the low-pressure stage compressor **(21)** to adapt to the load of the refrigeration capacity and is constituted as a first control means. The second control section **(102)** inverter-controls the operating frequency of the high-pressure stage compressor **(31)** so that the intermediate pressure in the two-stage compression refrigeration cycle has a predetermined value, and is constituted as a second control means. The third control section **(103)** inverter-controls, at startup, instead of the second control section **(102),** the operating frequency of the high-pressure stage compressor **(31)** so that the high-pressure stage compressor **(31)** has a predetermined target operating frequency derived based on the operating frequency of the low-pressure stage compressor **(21),** and is constituted as a third control means.

### - Operational Behavior -

Next, a description is given of the operational behavior of the air conditioning system **(10)** of this embodiment.

The air conditioning system **(10)** performs cooling and heating operations in a single-stage compression refrigeration cycle and a heating operation in a two-stage compression refrigeration cycle.

### <Cooling Operation>

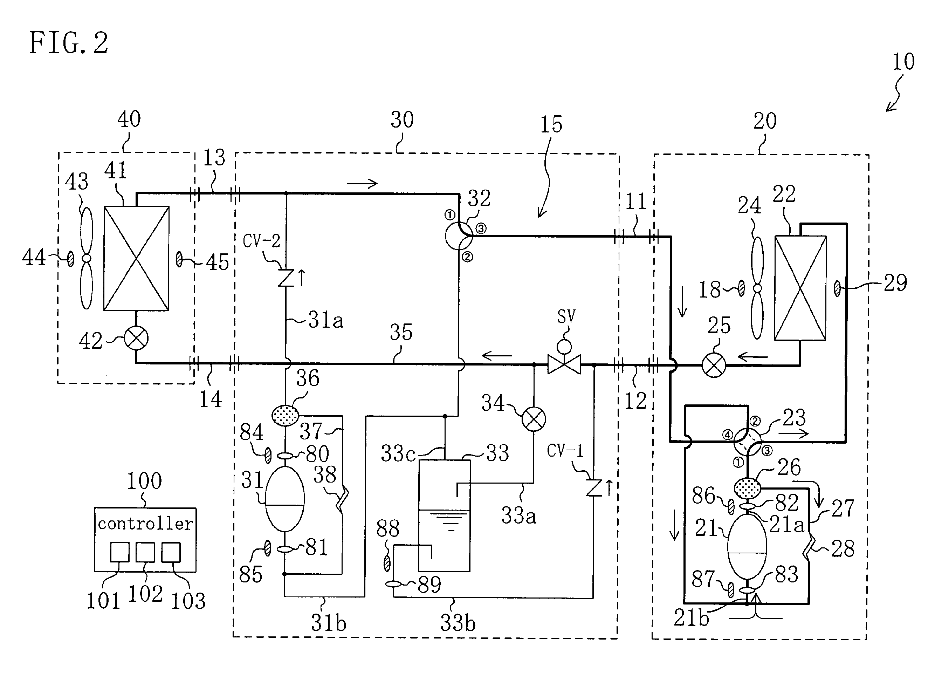

In the cooling operation, as shown in Figure **2****,** by the control of the controller **(100),** the four-way selector valve **(23)** and the three-way selector valve **(32)** are selected to their respective second positions and the solenoid valve **(SV)** is selected to its open position. Furthermore, the outdoor expansion valve **(25)** and the option side expansion valve **(34)** are selected to fully open and fully closed positions, respectively, and the opening of the indoor expansion valve **(42)** is appropriately controlled according to the operating conditions. Furthermore, in the cooling operation, the low-pressure stage compressor **(21)** is driven while the high-pressure stage compressor **(31)** is shut off In other words, the refrigerant circuit **(15)** during the cooling operation compresses refrigerant only in the low-pressure stage compressor **(21)** so that the suction and discharge pressures of the low-pressure stage compressor **(21)** are low and high pressures, respectively, in a single-stage compression refrigeration cycle.

In the outdoor unit **(20),** high-pressure refrigerant discharged from the low-pressure stage compressor **(21)** flows through the outdoor heat exchanger **(22)** to release heat to outdoor air and thereby condense or liquefy. The liquid refrigerant obtained by condensation in the outdoor heat exchanger **(22)** flows through the outdoor expansion valve **(25)** in fully open position, then flows through the second connection pipe **(21)** and is then pumped into the option unit **(30).**

In the option unit **(30),** the high-pressure liquid refrigerant flows through the main pipe **(35),** then flows through the fourth connection pipe **(14)** and is then pumped into the indoor unit **(40).**

The refrigerant pumped in the indoor unit **(40)** is reduced in pressure during passage through the indoor expansion valve **(42)** to expand into low-pressure refrigerant. The low-pressure refrigerant flows through the indoor heat exchanger **(41)** to take heat from room air and thereby evaporate. As a result, the room air is cooled to cool the room. The refrigerant having evaporated in the indoor heat exchanger **(41)** is pumped through the third connection pipe **(13)** into the option unit **(30),** then flows via the three-way selector valve **(32)** into the first connection pipe **(11)** and is then pumped into the outdoor unit **(20).** The low-pressure refrigerant pumped in the outdoor unit **(20)** is sucked into the low-pressure stage compressor **(21)** and then compressed therein into high-pressure refrigerant.

### <Control during Cooling Operation>

During the cooling operation, the first control section **(101)** of the controller **(100)** inverter-controls the operating frequency of the low-pressure stage compressor **(21)** to adapt to the cooling load that is the load of the refrigeration capacity. In other words, the first control section **(101)** controls the operating frequency of the low-pressure stage compressor **(21)** so that the evaporation temperature in the indoor heat exchanger **(41)** becomes a set room temperature Te°C. Specifically, the first control section **(101)** controls the operating frequency of the low-pressure stage compressor **(21)** so that the suction pressure of the low-pressure stage compressor **(21)** has a pressure value appropriate to the evaporation pressure corresponding to the set temperature Te°C.

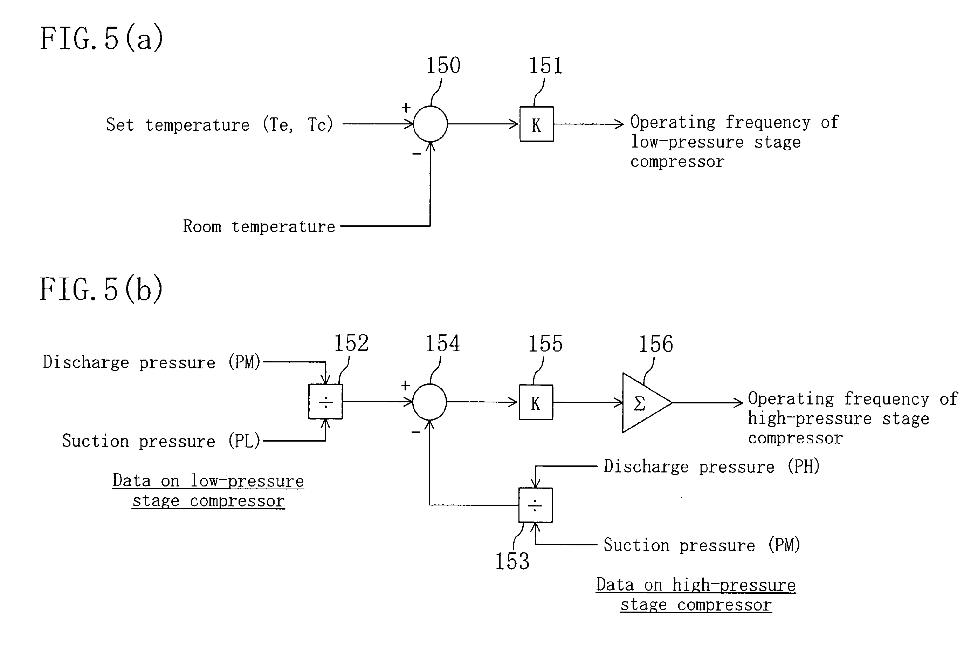

To attain this, as shown in Figure **5(a)****,** the first control section **(101)** first calculates, in a comparison circuit **(150),** the temperature difference between the set temperature Te°C and the actual room temperature measured by the room temperature sensor **(44).** Thereafter, the first control section **(101)** calculates, in a gain circuit **(151),** the operating frequency of the low-pressure stage compressor **(21)** by multiplying the temperature difference output from the comparison circuit **(150)** by a constant K and then controls the low-pressure stage compressor **(21).**

Note that since the high-pressure stage compressor **(31)** is shut off, the second control section **(102)** does not control it.

### <Heating Operation in Single-Stage Compression Refrigeration Cycle>

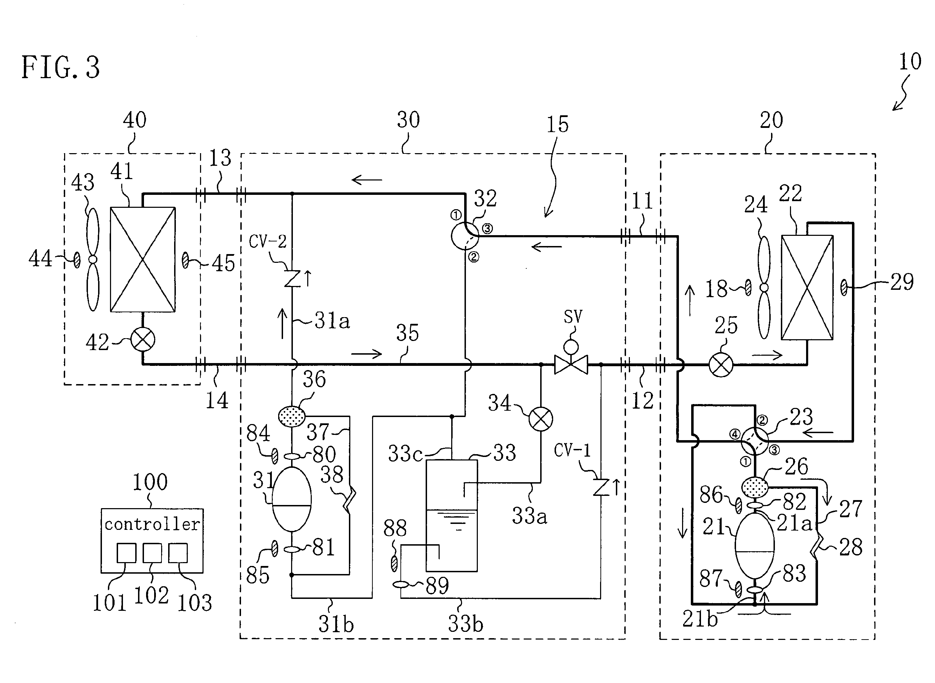

In the heating operation in a single-stage compression refrigeration cycle, as shown in Figure 3, by the control of the controller **(100),** the four-way selector valve **(23)** is selected to its first position, the three-way selector valve **(32)** is selected to its second position and the solenoid valve **(SV)** is selected to its open position. Furthermore, the option side expansion valve **(34)** and the indoor expansion valve **(42)** are selected to fully closed and fully open positions, respectively, and the opening of the outdoor expansion valve **(25)** is appropriately controlled according to the operating conditions. Furthermore, in this heating operation, the low-pressure stage compressor **(21)** is driven while the high-pressure stage compressor **(31)** is shut off. In other words, the refrigerant circuit **(15)** during this heating operation compresses refrigerant only in the low-pressure stage compressor **(21)** so that the suction and discharge pressures of the low-pressure stage compressor **(21)** are low and high pressures, respectively, in the single-stage compression refrigeration cycle.

In the outdoor unit **(20),** high-pressure refrigerant discharged from the low-pressure stage compressor **(21)** flows via the four-way selector valve **(23)** through the first connection pipe **(11)** and is then pumped into the option unit **(30).**

The high-pressure refrigerant pumped in the option unit **(30)** flows via the three-way selector valve **(32)** through the third connection pipe **(13)** and is then pumped into the indoor unit **(40).**

In the indoor unit **(40),** the high-pressure refrigerant flows through the indoor heat exchanger **(41)** to release heat to room air and thereby condense or liquefy. As a result, the room air is heated to heat the room. The liquid refrigerant obtained by condensation in the indoor heat exchanger **(41)** flows through the indoor expansion valve **(42)** in fully open position, then flows through the fourth connection pipe **(14)** and is then pumped into the option unit **(30).**

The high-pressure liquid refrigerant pumped in the option unit **(30)** flows through the main pipe **(35),** then flows through the second connection pipe **(12)** and is then pumped into the outdoor unit **(20).**

The refrigerant pumped in the outdoor unit **(20)** is reduced in pressure during passage through the outdoor expansion valve **(25)** to expand into low-pressure refrigerant. The low-pressure refrigerant flows through the outdoor heat exchanger **(22)** to take heat from outdoor air and thereby evaporate. The low-pressure refrigerant having evaporated in the outdoor heat exchanger **(22)** is sucked via the four-way selector valve **(23)** into the low-pressure stage compressor **(21)** and then compressed therein into high-pressure refrigerant.

### <Control during Heating Operation in Single-Stage Compression Refrigeration Cycle>

During the heating operation in a single-stage compression refrigeration cycle, the first control section **(101)** of the controller **(100)** inverter-controls the operating frequency of the low-pressure stage compressor **(21)** to adapt to the heating load that is the load of the refrigeration capacity. In other words, the first control section **(101)** controls the operating frequency of the low-pressure stage compressor **(21)** so that the condensation temperature in the indoor heat exchanger **(41)** becomes a set room temperature Tc°C. Specifically, the first control section **(101)** controls the operating frequency of the low-pressure stage compressor **(21)** so that the discharge pressure of the low-pressure stage compressor **(21)** has a pressure value appropriate to the condensation pressure corresponding to the set temperature Tc°C.

To attain this, as shown in Figure **5(a)****,** the first control section **(101)** first calculates, in the comparison circuit **(150),** the temperature difference between the set temperature Tc°C and the actual room temperature measured by the room temperature sensor **(44).** Thereafter, the first control section **(101)** calculates, in the gain circuit **(151),** the operating frequency of the low-pressure stage compressor **(21)** by multiplying the temperature difference output from the comparison circuit **(150)** by a constant K and then controls the low-pressure stage compressor **(21).**

Note that since the high-pressure stage compressor **(31)** is shut off, the second control section **(102)** does not control it.

### <Heating Operation in Two-Stage Compression Refrigeration Cycle>

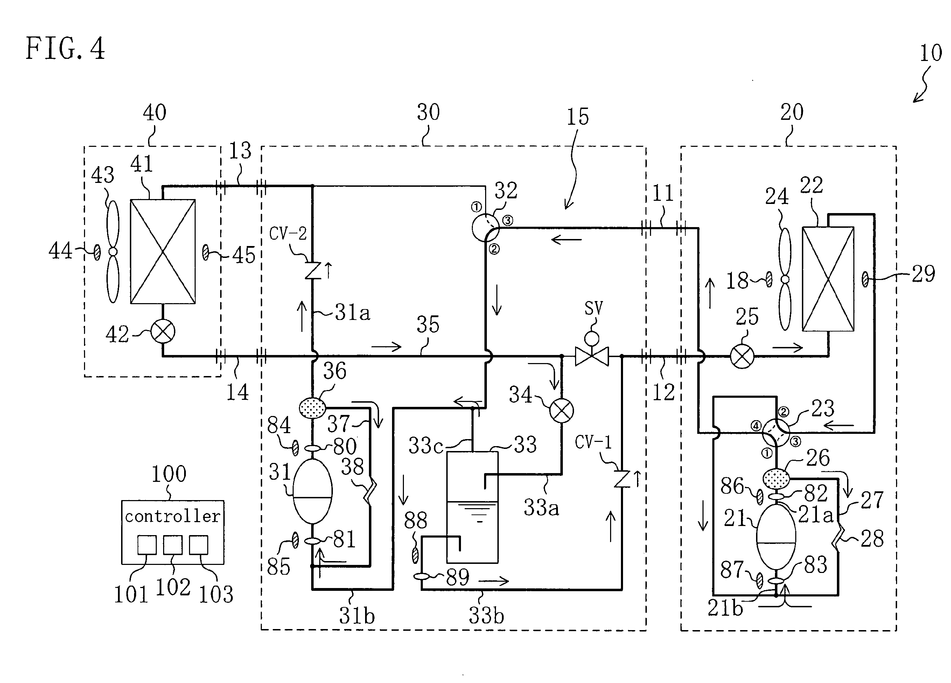

In the heating operation in a two-stage compression refrigeration cycle, as shown in Figure **4****,** by the control of the controller **(100),** the four-way selector valve **(23)** and the three-way selector valve **(32)** are selected to their respective first positions and the solenoid valve **(SV)** is selected to its closed position. Furthermore, the openings of the indoor expansion valve **(42),** the option side expansion valve **(34)** and the outdoor expansion valve **(25)** are appropriately controlled according to the operating conditions. Furthermore, in this heating operation, the low-pressure stage compressor **(21)** and the high-pressure stage compressor **(31)** are both driven. In other words, the refrigerant circuit **(15)** during this heating operation operates in a two-stage compression refrigeration cycle in which refrigerant compressed by the low-pressure stage compressor **(21)** is further compressed by the high-pressure stage compressor **(31)** so that the suction and discharge pressures of the low-pressure stage compressor **(21)** are low and intermediate pressures, respectively, in the refrigeration cycle and that the discharge pressure of the high-pressure stage compressor **(31)** is a high pressure in the refrigeration cycle.

In the option unit **(30),** the high-pressure refrigerant discharged from the high-pressure stage compressor **(31)** flows through the third connection pipe **(13)** and is then pumped into the indoor unit **(40).**

In the indoor unit **(40),** the high-pressure refrigerant releases heat to room air during passage through the indoor heat exchanger **(41)** to condense or liquefy. As a result, the room air is heated to heat the room.

The liquid refrigerant obtained by condensation in the indoor heat exchanger **(41)** flows through the indoor expansion valve **(42),** then flows through the fourth connection pipe **(14),** is then pumped into the option unit **(30),** then flows through the main pipe **(35),** then flows through the option side expansion valve **(34),** and then flows into the liquid inflow pipe **(33a)**. The liquid refrigerant is stepwise reduced in pressure by the indoor expansion valve **(42)** and the option side expansion valve **(34)** to expand into intermediate-pressure, gas-liquid two-phase refrigerant and then flows into the gas-liquid separator **(33).**

In the gas-liquid separator **(33),** the intermediate-pressure refrigerant in a gas-liquid two-phase state is separated into gas refrigerant and liquid refrigerant. The separated gas refrigerant in a saturated state flows through the gas outflow pipe **(33c)** and is then sent to the suction pipe **(31b)** of the high-pressure stage compressor **(31).** On the other hand, the separated liquid refrigerant flows out through the liquid outflow pipe **(33b),** then flows through the second connection pipe **(12)** and is then pumped into the outdoor unit **(20).**

The intermediate-pressure liquid refrigerant pumped in the outdoor unit **(20)** is reduced in pressure during passage through the outdoor expansion valve **(25)** to expand into low-pressure refrigerant, and the low-pressure refrigerant takes heat from outdoor air during passage through the outdoor heat exchanger **(22)** to evaporate. The low-pressure refrigerant having evaporated in the outdoor heat exchanger **(22)** is sucked via the four-way selector valve **(23)** into the low-pressure stage compressor **(21).** In the low-pressure stage compressor **(21),** the low-pressure refrigerant is compressed into intermediate-pressure refrigerant. The intermediate-pressure refrigerant flows via the four-way selector valve **(23)** into the first connection pipe **(11)** and is then pumped into the option unit **(30).**

In the option unit **(30),** the intermediate-pressure refrigerant discharged from the low-pressure stage compressor **(21)** flows via the three-way selector valve **(32)** through the suction pipe **(31b)** of the high-pressure stage compressor **(31).** Refrigerant is supplied through the gas outflow pipe **(33c)** to the intermediate-pressure refrigerant flowing through the suction pipe **(31c)** and the refrigerant mixture is sucked into the high-pressure stage compressor **(31).** In the high-pressure stage compressor **(31),** the intermediate-pressure refrigerant is compressed into high-pressure refrigerant.

As described so far, during the heating operation in a two-stage compression refrigeration cycle, intermediate-pressure refrigerant in a gas-liquid two-phase state is separated into gas refrigerant and liquid refrigerant by the gas-liquid separator **(33)** and the separated gas refrigerant is returned to the high-pressure stage compressor **(31),** thereby sending only liquid refrigerant to the outdoor heat exchanger **(22).** This reduces the pressure loss in the pipes for liquid running from the gas-liquid separator **(33)** to the outdoor heat exchanger **(22)** and prevents the occurrence of a so-called flash phenomenon in which part of liquid refrigerant evaporates and remains in the pipes.

### <Control during Heating Operation in Two-Stage Compression Refrigeration Cycle>

During the heating operation in a two-stage compression refrigeration cycle, the first control section **(101)** of the controller **(100)** controls the low-pressure stage compressor **(21)** and the second control section **(102)** and third control section **(103)** thereof inverter-control the high-pressure stage compressor **(31).**

First, as shown in Figure **5(a)****,** the first control section **(101)** controls the operating frequency of the low-pressure stage compressor **(21)** to adapt to the heating load that is the load of the refrigeration capacity. In other words, the first control section **(101)** controls the operating frequency of the low-pressure stage compressor **(21)** so that the condensation temperature in the indoor heat exchanger **(41)** becomes a set room temperature Tc°C. Specifically, the first control section **(101)** controls the operating frequency of the low-pressure stage compressor **(21)** so that the discharge pressure of the high-pressure stage compressor **(31)** has a pressure value appropriate to the condensation pressure corresponding to the set temperature Tc°C.

To attain this, as shown in Figure **5(a)****,** the first control section **(101)** first calculates, in the comparison circuit **(150),** the temperature difference between the set temperature Tc°C and the actual room temperature measured by the room temperature sensor **(44).** Thereafter, the first control section **(101)** calculates, in the gain circuit **(151),** the operating frequency of the low-pressure stage compressor **(21)** by multiplying the temperature difference output from the comparison circuit **(150)** by a constant K and then controls the low-pressure stage compressor **(21).**

On the other hand, the second control section **(102)** controls the high-pressure stage compressor **(31)** so that the intermediate pressure (PM) between the low-pressure stage compressor **(21)** and the high-pressure stage compressor **(31)** has a predetermined value. In this embodiment, the predetermined value of the intermediate pressure is the intermediate pressure value at which the ratio between the first pressure ratio (PM/PL), i.e., the ratio of the discharge pressure (PM) of the low-pressure stage compressor **(21)** to the suction pressure (PL) thereof, and the second pressure ratio (PH/PM), i.e., the ratio of the discharge pressure (PH) of the high-pressure stage compressor **(31)** to the suction pressure (PM) thereof, is 1:1. In other words, the intermediate pressure value is the geometric mean {(PL·PH)^{1/2}} of the suction pressure (PL) of the low-pressure stage compressor **(21)** and the discharge pressure (PH) of the high-pressure stage compressor **(31).**

Specifically, as shown in Figure **5(b)****,** the second control section **(102)** calculates the first pressure ratio (PM/PL) of the low-pressure stage compressor **(21)** in a first dividing circuit **(152)** and calculates the second pressure ratio (PH/PM) of the high-pressure stage compressor **(31)** in a second dividing circuit **(153).** Then, the second control section **(102)** calculates the pressure difference {(PM/PL)-(PH/PM)} between the first pressure ratio (PM/PL) and the second pressure ratio (PH/PM) in a comparison circuit **(154)** and derives a gain K from the pressure difference in a gain circuit **(155).** Then, the second control section **(102)** derives, in a derivation circuit **(156),** a target operating frequency of the high-pressure stage compressor **(31)** by multiplying the current operating frequency of the high-pressure stage compressor **(31)** by the gain K and controls the high-pressure stage compressor **(31)** so that it is driven at the target operating frequency.

In this embodiment, a value measured by the suction pressure sensor **(83)** is used as the suction pressure (PL) of the low-pressure stage compressor **(21),** a value measured by the discharge pressure sensor **(82)** is used as the discharge pressure (PM) of the low-pressure stage compressor **(21),** a value measured by the suction pressure sensor **(81)** is used as the suction pressure (PM) of the high-pressure stage compressor **(31)** and a value measured by the discharge pressure sensor **(80)** is used as the discharge pressure (PH) of the high-pressure stage compressor **(31).** However, other values may be used as these pressures. Specifically, a value measured by the pressure sensor **(89)** of the liquid outflow pipe **(33b)** of the gas-liquid separator **(33)** or a saturated pressure corresponding to a value measured by the temperature sensor **(88)** of the liquid outflow pipe **(33b)** may be used as the discharge pressure (PM) of the low-pressure stage compressor **(21)** and the suction pressure (PM) of the high-pressure stage compressor **(31)** both of which are the intermediate pressure (PM). Furthermore, for the sake of simplicity, the condensation pressure according to the condensation temperature in the indoor heat exchanger **(41)** and the evaporation pressure according to the evaporation temperature in the outdoor heat exchanger **(22)** may be used as the discharge pressure (PH) of the high-pressure stage compressor **(31)** and the suction pressure (PL) of the low-pressure stage compressor **(21),** respectively.

Then, by repeating the above controls of the first control section **(101)** and second control section **(102),** the operating frequencies of the high-pressure stage compressor **(31)** and low-pressure stage compressor **(21)** become operating frequencies appropriate to the heating load and providing the highest COP.

At startup of the heating operation in the two-stage compression refrigeration cycle, the third control section **(103)** controls, instead of the second control section **(102),** the operating frequency of the high-pressure stage compressor **(31).** Specifically, the third control section **(103)** controls the high-pressure stage compressor **(31)** so that its operating frequency is n times (for example, n=1.3) as high as that of the low-pressure stage compressor **(21).** The reason for this is as follows: In order to bring the intermediate pressure to the predetermined value, the second control section **(102)** makes a feedback control of changing the operating frequency of the high-pressure stage compressor **(31)** following the change in the operating frequency of the low-pressure stage compressor **(21)** controlled by the first control section **(101).** If, at startup, the second control section **(102)** controls the high-pressure stage compressor **(31),** a delay due to the feedback control occurs so that it takes a long time to reach a predetermined operating power. This problem must be prevented.

### - Effects of Embodiment 1 -

According to this embodiment, since during the heating operation in the two-stage compression refrigeration cycle the first control section **(101)** controls the operating frequency of the low-pressure stage compressor **(21)** to adapt to the heating load that is the load of the refrigeration capacity and the second control section **(102)** controls the operating frequency of the high-pressure stage compressor **(31)** so that the ratio between the first pressure ratio (PM/PL) of the low-pressure stage compressor **(21)** and the second pressure ratio (PH/PM) of the high-pressure stage compressor **(31)** is 1:1, the air conditioning system **(10)** can perform an operation appropriate to the heating load and can enhance the COP. Therefore, the air conditioning system **(10)** can perform an operation appropriate to the operating conditions.

Furthermore, according to this embodiment, the first control section **(101)** provides an operating power control according to the refrigeration load not only by controlling the operating frequency of the low-pressure stage compressor **(21)** during operation in the single-stage compression refrigeration cycle with the existing outdoor unit **(20)** and indoor unit **(40)** connected to each other, but also by controlling the operating frequency of the low-pressure stage compressor **(21)** through the application of the above operating power control during operation in the two-stage compression refrigeration cycle with the existing units connected to the option unit **(30).** This simplifies the configuration of the control means.

Furthermore, since at startup the third control section **(103)** controls, instead of the second control section **(102),** the operating frequency of the high-pressure stage compressor **(31),** this prevents a delay in control on the high-pressure stage compressor **(31)** from being caused by feedback control of the second control section **(102)** at startup and thereby promptly provides an operation adapted to the heating load.

### <<Embodiment 2 of the Invention>>

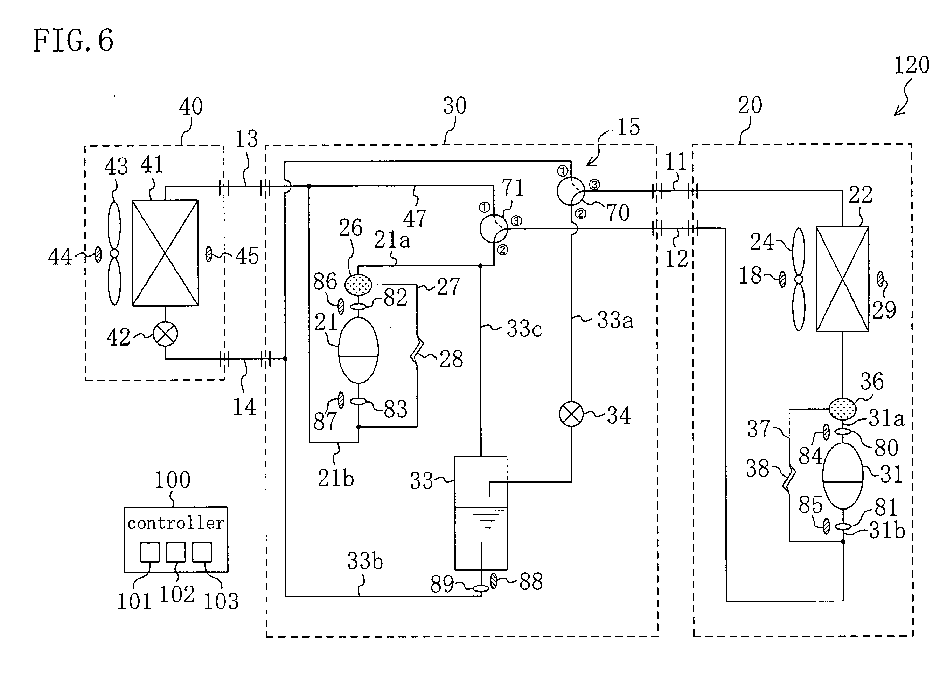

Embodiment 2 of the present invention is, as shown in Figure **6****,** a refrigeration system **(120)** for cooling the interior of a cooling room. The refrigeration system **(120)** includes an outdoor unit **(20)** placed outdoors, an option unit **(30)** constituting an expansion unit, an indoor unit **(40)** placed in a cooling room, and a controller **(100)** for controlling the operation of the refrigeration system **(120).** The outdoor unit **(20)** is connected via a first connection pipe **(11)** and a second connection pipe **(12)** to the option unit **(30).** The indoor unit **(40)** is connected via a third connection pipe **(13)** and a fourth connection pipe **(14)** to the option unit **(30).** Thus, in the refrigeration system (120), a refrigerant circuit **(15)** operating in a vapor compression refrigeration cycle by circulating refrigerant therethrough is constituted.

The option unit **(30)** constitutes a power-up unit for an existing separate-type refrigeration system. Specifically, in the existing refrigeration system, a refrigerant circuit including the outdoor unit **(20)** and the indoor unit **(40)** performs a cooling operation in a single-stage compression refrigeration cycle for chilling materials in the cooling room. When the option unit **(30)** is additionally connected between the outdoor unit **(20)** and the indoor unit **(40),** the refrigerant circuit can perform a cooling operation in a two-stage compression refrigeration cycle for freezing materials in the cooling room.

### <Outdoor Unit>

The outdoor unit **(20)** includes a high-pressure stage compressor **(31)** and an outdoor heat exchanger **(22).**

The high-pressure stage compressor **(31)** is a scroll compressor and is configured to be supplied with power through an inverter to change its operating frequency and specifically to change the rotational speed of the compressor motor by changing the output frequency of the inverter. In other words, the high-pressure stage compressor **(31)** is constituted as a first compression mechanism variable in displacement by controlling the inverter.

The outdoor heat exchanger **(22)** is constituted by a cross-fin-and-tube heat exchanger. Disposed close to the outdoor heat exchanger **(22)** is an outdoor fan **(24).** The outdoor fan **(24)** delivers outdoor air to the outdoor heat exchanger **(22).**

A suction pipe **(31b)** of the high-pressure stage compressor **(31)** is connected to one end of the second connection pipe **(12)** and a discharge pipe **(31a)** thereof is connected via the outdoor heat exchanger **(22)** to one end of the first connection pipe **(11).**

The discharge pipe **(31a)** of the high-pressure stage compressor **(31)** is provided with a high-pressure stage oil separator **(36).** The high-pressure stage oil separator **(36)** is connected to one end of a second oil return pipe **(37).** The other end of the second oil return pipe **(37)** is connected to the suction pipe **(31b)** of the high-pressure stage compressor **(31).** The second oil return pipe **(37)** is also connected to a second capillary tube **(38).** Thus, refrigerating machine oil separated by the high-pressure stage oil separator **(36)** is reduced in pressure during flow through the second oil return pipe **(37)** and then returned to the high-pressure stage compressor **(31).**

Furthermore, the outdoor unit **(20)** is provided with various sensors. Specifically, the discharge pipe **(31a)** of the high-pressure stage compressor **(31)** is provided with a discharge pressure sensor **(80)** and a discharge temperature sensor **(84)** and the suction pipe **(31b)** thereof is provided with a suction pressure sensor **(81)** and a suction temperature sensor **(85).** The outdoor unit **(20)** is also provided with an outdoor temperature sensor **(18)** and a refrigerant temperature sensor **(29)** for the outdoor heat exchanger **(22).**

### <Option Unit>

The option unit **(30)** includes a low-pressure stage compressor **(21),** a gas-liquid separator **(33),** an option side expansion valve **(34),** a first three-way selector valve **(70)** and a second three-way selector valve **(71).**

The low-pressure stage compressor **(21)** is a scroll compressor and is configured to be supplied with power through an inverter to change its operating frequency and specifically to change the rotational speed of the compressor motor by changing the output frequency of the inverter. In other words, the low-pressure stage compressor **(21)** is constituted as a second compression mechanism variable in displacement by controlling the inverter.

The gas-liquid separator **(33)** is formed of a cylindrical hermetic vessel and includes a liquid refrigerant reservoir as a liquid layer formed in a lower part thereof and a gas refrigerant reservoir formed above the liquid refrigerant reservoir. The gas-liquid separator **(33)** is connected to a liquid inflow pipe **(33a)** passing through the sidewall thereof and opening into the gas refrigerant reservoir and a liquid outflow pipe **(33b)** passing through the bottom thereof and opening into the liquid refrigerant reservoir. The gas-liquid separator **(33)** is also connected to a gas outflow pipe **(33c)** passing through the top thereof and opening into the gas refrigerant reservoir.

The first three-way selector valve **(70)** has first to third ports. The first port of the first three-way selector valve **(70)** is connected to an outflow end of the liquid outflow pipe **(33b)** of the gas-liquid separator **(33),** the second port thereof is connected to an inflow end of the liquid inflow pipe **(33a)** of the gas-liquid separator **(33)** and the third port thereof is connected to the other end of the first liquid-side connection pipe **(11).** The first three-way selector valve **(70)** is configured to be switchable between a first position (the position shown in the solid line in Figure **6****)** in which the second port is communicated with the third port and a second position (the position shown in the broken line in Figure **6****)** in which the first port is communicated with the third port.

The second three-way selector valve **(71)** has first to third ports. The first port of the second three-way selector valve **(71)** is connected through a connecting pipe **(47)** to one end of the third connection pipe **(13),** the second port thereof is connected to a discharge pipe **(21a)** of the low-pressure stage compressor **(21)** and the third port thereof is connected to the other end of the second connection pipe **(12).** The second three-way selector valve **(71)** is configured to be switchable between a first position (the position shown in the solid line in Figure **6****)** in which the second and third ports are communicated with each other and a second position (the position shown in the broken line in Figure **6****)** in which the first and third ports are communicated with each other.

One end of the fourth connection pipe **(14)** is connected halfway along the liquid outflow pipe **(33b).** The option side expansion valve **(34)** is provided halfway along the liquid inflow pipe **(33a).** The option side expansion valve **(34)** is composed of an electronic expansion valve controllable in opening. The outflow end of the gas outflow pipe **(33c)** is connected halfway along the discharge pipe **(21a)** of the low-pressure stage compressor **(21).**

The discharge pipe **(21a)** of the low-pressure stage compressor **(21)** is provided with a low-pressure stage oil separator **(26).** The low-pressure stage oil separator **(26)** is connected to one end of a first oil return pipe **(27).** The other end of the first oil return pipe **(27)** is connected to a suction pipe **(21b)** of the low-pressure stage compressor **(21).** The first oil return pipe **(27)** is provided with a first capillary tube **(28).** Thus, refrigerating machine oil separated by the low-pressure stage oil separator **(26)** is reduced in pressure during flow through the first oil return pipe **(27)** and then returned to the low-pressure stage compressor **(21).**

Furthermore, the option unit **(30)** is provided with various sensors. Specifically, the discharge pipe **(21a)** of the low-pressure stage compressor **(21)** is provided with a discharge pressure sensor **(82)** and a discharge temperature sensor **(86)** and the suction pipe **(21b)** thereof is provided with a suction pressure sensor **(83)** and a suction temperature sensor **(87).** The liquid outflow pipe **(33b)** of the gas-liquid separator **(33)** is provided with a temperature sensor **(88)** and a pressure sensor **(89).**

### <Indoor Unit>

The indoor unit **(40)** includes an indoor heat exchanger **(41)** and an indoor expansion valve **(42).** The indoor heat exchanger **(41)** is constituted by a cross-fin-and-tube heat exchanger. Disposed close to the indoor heat exchanger **(41)** is an indoor fan **(43).** The indoor fan **(43)** delivers room air to the indoor heat exchanger **(41).** The indoor expansion valve **(42)** is composed of an electronic expansion valve controllable in opening.

In the indoor unit **(40),** the other end of the third connection pipe **(13)** is connected via the indoor heat exchanger **(41)** and the indoor expansion valve **(42)** to the other end of the fourth connection pipe **(14).**

The indoor unit **(40)** is also provided with a cooling room temperature sensor **(44)** and a refrigerant temperature sensor **(45)** for the indoor heat exchanger **(41).**

### <Controller>

The controller **(100)** is used for controlling the operational behavior of the refrigeration system **(120)** by changing the positions of the various valves disposed in the refrigerant circuit **(15)** and controlling the openings thereof. The controller **(100)** includes a first control section **(101),** a second control section **(102)** and a third control section **(103).** The first control section **(101)** inverter-controls the operating frequency of the high-pressure stage compressor **(31)** to adapt to the load of the refrigeration capacity and is constituted as a first control means. The second control section **(102)** inverter-controls the operating frequency of the low-pressure stage compressor **(21)** so that the intermediate pressure in the two-stage compression has a predetermined value, and is constituted as a second control means. The third control section **(103)** is constituted as a third control means that, at startup, controls the operating frequency of the low-pressure stage compressor **(21)** instead of the second control section **(102)** so that the low-pressure stage compressor **(21)** has a predetermined target operating frequency derived based on the operating frequency of the high-pressure stage compressor **(31).**

### - Operational Behavior -

Next, a description is given of the operational behavior of the refrigeration system **(120)** of this embodiment.

The refrigeration system **(120)** performs a cooling operation in a single-stage compression refrigeration cycle for chilling materials in the cooling room and a cooling operation in a two-stage compression refrigeration cycle for freezing materials in the cooling room.

### <Cooling Operation in Single-Stage Compression Refrigeration Cycle>

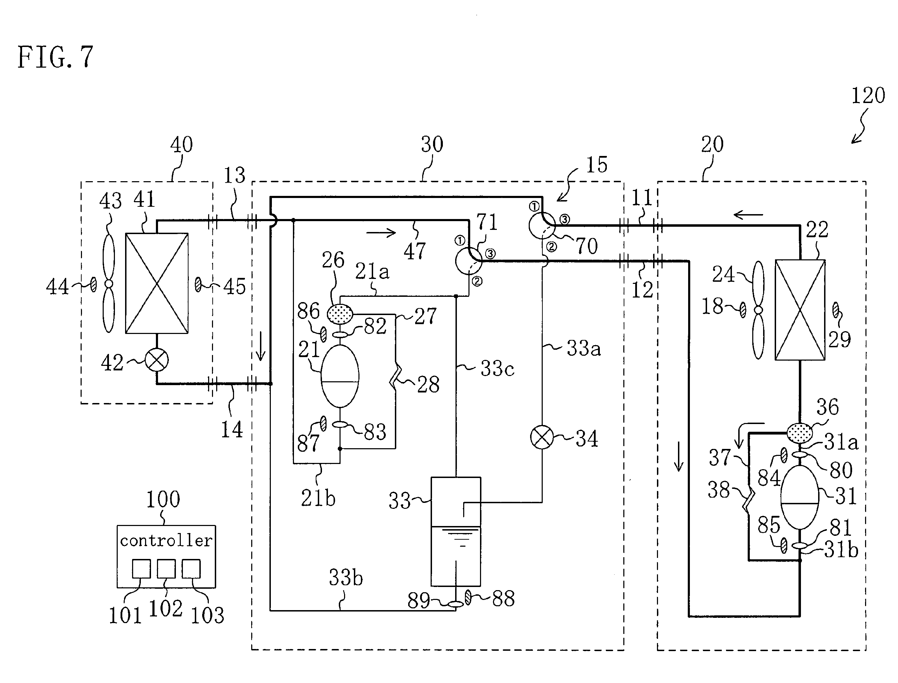

In the cooling operation in a single-stage compression refrigeration cycle, as shown in Figure 7, by the control of the controller **(100),** the first three-way selector valve **(70)** and the second three-way selector valve **(71)** in the option unit **(30)** are selected to their respective second positions. Furthermore, the opening of the indoor expansion valve **(42)** is appropriately controlled according to the operating conditions. Furthermore, in this cooling operation, the high-pressure stage compressor **(31)** is driven while the low-pressure stage compressor **(21)** is shut off. In other words, the refrigerant circuit **(15)** during the cooling operation compresses refrigerant only in the high-pressure stage compressor **(31)** so that the suction and discharge pressures of the high-pressure stage compressor **(31)** are low and high pressures, respectively, in a single-stage compression refrigeration cycle.

In the outdoor unit **(20),** the high-pressure refrigerant discharged from the high-pressure stage compressor **(31)** is sent to the outdoor heat exchanger **(22)** and releases heat therein to outdoor air and thereby condenses or liquefies. The high-pressure liquid refrigerant obtained by condensation in the outdoor heat exchanger **(22)** flows through the first connection pipe **(11)** and is then pumped into the option unit **(30).**

In the option unit **(30),** the high-pressure refrigerant flows via the first three-way selector valve **(70)** through the liquid outflow pipe **(33b),** then flows through the fourth connection pipe **(14)** and is then pumped into the indoor unit **(40).**

The high-pressure refrigerant pumped in the indoor unit **(40)** is reduced in pressure during passage through the indoor expansion valve **(42)** to expand into low-pressure refrigerant. The low-pressure refrigerant flows through the indoor heat exchanger **(41)** to take heat from room air and thereby evaporate. As a result, the air in the cooling room is cooled. The refrigerant having evaporated in the indoor heat exchanger **(41)** is pumped through the third connection pipe **(13)** into the option unit **(30).**

The low-pressure refrigerant pumped in the option unit **(30)** flows through the connecting pipe **(47),** then flows via the second three-way selector valve **(71)** through the second connection pipe **(12)** and is then pumped into the outdoor unit **(20).** The low-pressure refrigerant pumped in the outdoor unit **(20)** is sucked into the high-pressure stage compressor **(31)** and then compressed therein into high-pressure refrigerant.

### <Control during Cooling Operation in Single-Stage Compression Refrigeration Cycle>

During the cooling operation in a single-stage compression refrigeration cycle, the first control section **(101)** of the controller **(100)** inverter-controls the operating frequency of the high-pressure stage compressor **(31)** to adapt to the cooling load that is the load of the refrigeration capacity. In other words, the first control section **(101)** controls the operating frequency of the high-pressure stage compressor **(31)** so that the evaporation temperature in the indoor heat exchanger **(41)** becomes a set cooling room temperature Te°C. Specifically, the first control section **(101)** controls the operating frequency of the high-pressure stage compressor **(31)** so that the suction pressure of the high-pressure stage compressor **(31)** has a pressure value appropriate to the evaporation pressure corresponding to the set temperature Te°C.

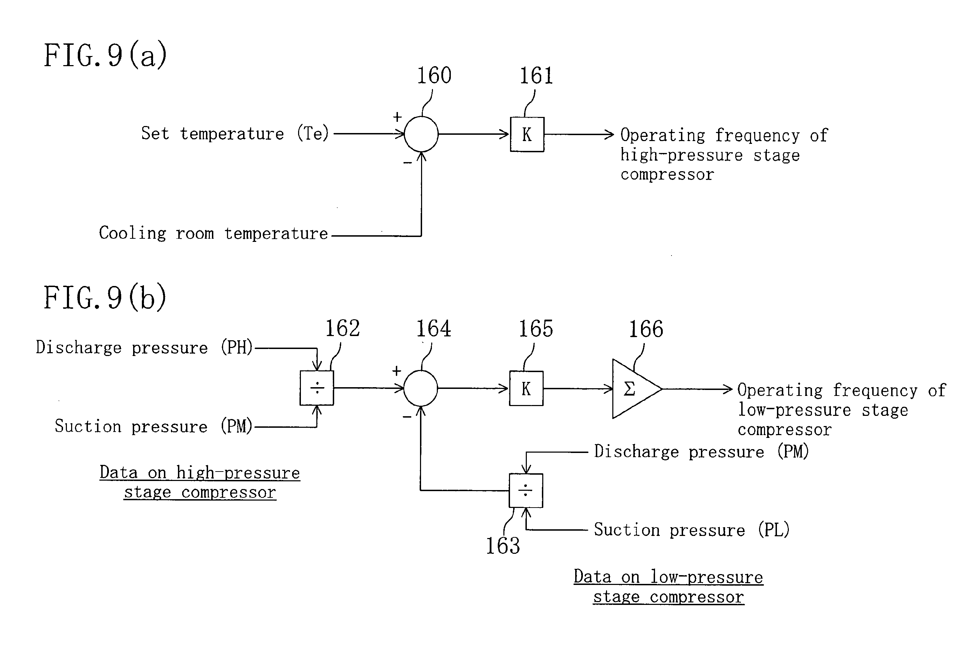

To attain this, as shown in Figure **9(a)****,** the first control section **(101)** first calculates, in a comparison circuit **(160),** the temperature difference between the set temperature Te°C and the actual cooling room temperature measured by the room temperature sensor **(44).** Thereafter, the first control section **(101)** calculates, in a gain circuit **(161),** the operating frequency of the high-pressure stage compressor **(31)** by multiplying the temperature difference output from the comparison circuit **(160)** by a constant K and then controls the high-pressure stage compressor **(31).**

Note that since the low-pressure stage compressor **(21)** is shut off, the second control section **(102)** does not control it.

### <Cooling Operation in Two-Stage Compression Refrigeration Cycle>

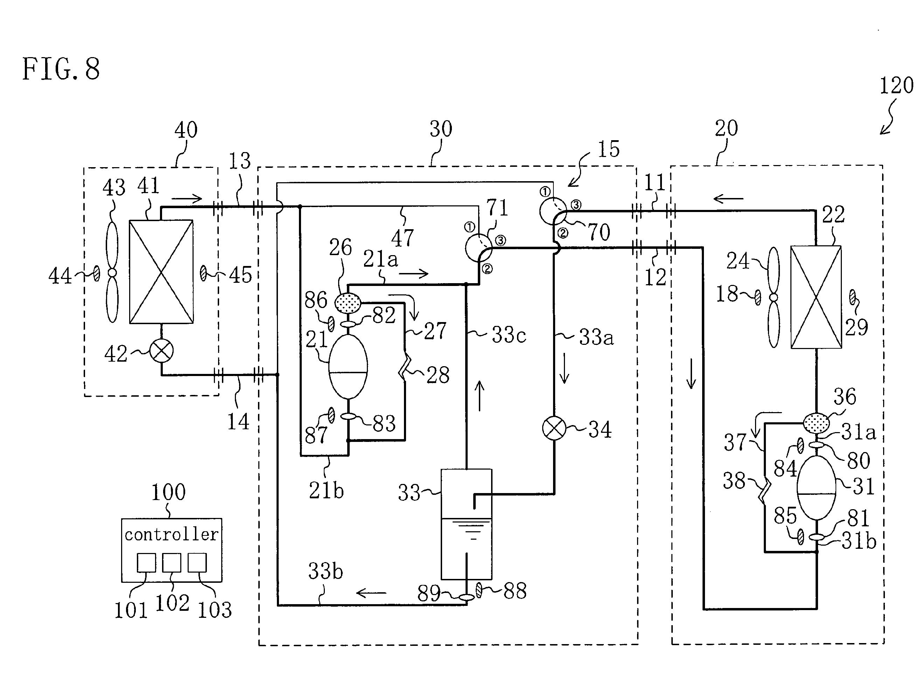

In the cooling operation in a two-stage compression refrigeration cycle, as shown in Figure **8****,** by the control of the controller **(100),** the first three-way selector valve **(70)** and the second three-way selector valve **(71)** in the option unit **(30)** are selected to their respective first positions. Furthermore, the opening of the indoor expansion valve **(42)** is appropriately controlled according to the operating conditions. Furthermore, in this cooling operation, the low-pressure stage compressor **(21)** and the high-pressure stage compressor **(31)** are both driven. In other words, the refrigerant circuit **(15)** during this cooling operation operates in a two-stage compression refrigeration cycle in which refrigerant compressed by the low-pressure stage compressor **(21)** is further compressed by the high-pressure stage compressor **(31)** so that the suction and discharge pressures of the low-pressure stage compressor **(21)** are low and intermediate pressures, respectively, in the refrigeration cycle and that the discharge pressure of the high-pressure stage compressor **(31)** is a high pressure in the refrigeration cycle.

In the outdoor unit **(20),** the high-pressure refrigerant discharged from the high-pressure stage compressor **(31)** is sent to the outdoor heat exchanger **(22)** and releases heat therein to outdoor air and thereby condenses or liquefies. The high-pressure liquid refrigerant obtained by condensation in the outdoor heat exchanger **(22)** flows through the first connection pipe **(11)** and is then pumped into the option unit **(30).**

In the option unit **(30),** the high-pressure liquid refrigerant flows via the first three-way selector valve **(70)** through the liquid inflow pipe **(33a).** The high-pressure liquid refrigerant is reduced in pressure during passage through the option side expansion valve **(34)** to expand into intermediate-pressure, gas-liquid two-phase refrigerant and then flows into the gas-liquid separator **(33).** In the gas-liquid separator **(33),** the intermediate-pressure refrigerant in a gas-liquid two-phase state is separated into gas refrigerant and liquid refrigerant. The separated gas refrigerant in a saturated state flows through the gas outflow pipe **(33c)** and is then sent to the discharge pipe **(21a)** of the low-pressure stage compressor **(21).** On the other hand, the separated liquid refrigerant flows out through the liquid outflow pipe **(33b),** then flows through the fourth connection pipe **(14)** and is then pumped into the indoor unit **(40).**

In the indoor unit **(40),** the intermediate-pressure liquid refrigerant is reduced in pressure during passage through the indoor expansion valve **(42)** to expand into low-pressure refrigerant. The low-pressure refrigerant takes heat from room air during passage through the indoor heat exchanger **(41)** to evaporate. As a result, the air in the cooling room is cooled. The evaporated low-pressure refrigerant flows through the third connection pipe **(13)** and is then pumped into the option unit **(30).**

In the option unit **(30),** the low-pressure refrigerant flows through the third connection pipe **(13)** and then through the suction pipe **(21b)** of the low-pressure stage compressor **(21),** is then sucked into the low-pressure stage compressor **(21)** and then compressed therein into intermediate-pressure refrigerant. While the intermediate-pressure refrigerant flows through the discharge pipe **(21a)** of the low-pressure stage compressor **(21),** saturated gas refrigerant is supplied through the gas outflow pipe **(33c)** to the intermediate-pressure refrigerant. Then, the refrigerant mixture flows via the second three-way selector valve **(71)** through the second connection pipe **(12)** and is then pumped into the outdoor unit **(20).**

The intermediate-pressure refrigerant pumped in the outdoor unit **(20)** is sucked through the suction pipe **(31b)** of the high-pressure stage compressor **(31)** into the high-pressure stage compressor **(31)** and then compressed therein into high-pressure refrigerant.

### <Control during Cooling Operation in Two-Stage Compression Refrigeration Cycle>

During the cooling operation in a two-stage compression refrigeration cycle, the first control section **(101)** of the controller **(100)** inverter-controls the operating frequency of the high-pressure stage compressor **(31)** to adapt to the cooling load that is the load of the refrigeration capacity. In other words, the first control section **(101)** controls the operating frequency of the high-pressure stage compressor **(31)** so that the evaporation temperature in the indoor heat exchanger **(41)** becomes a set cooling room temperature Te°C. Specifically, the first control section **(101)** controls the operating frequency of the high-pressure stage compressor **(31)** so that the suction pressure of the low-pressure stage compressor **(21)** has a pressure value appropriate to the evaporation pressure corresponding to the set temperature Te°C.

To attain this, as shown in Figure **9(a)****,** the first control section **(101)** first calculates, in the comparison circuit **(160),** the temperature difference between the set temperature Te°C and the actual cooling room temperature measured by the room temperature sensor **(44).** Thereafter, the first control section **(101)** calculates, in the gain circuit **(161),** the operating frequency of the high-pressure stage compressor **(31)** by multiplying the temperature difference output from the comparison circuit **(160)** by a constant K and then controls the high-pressure stage compressor **(31).**

On the other hand, the second control section **(102)** controls the low-pressure stage compressor **(21)** so that the intermediate pressure in the two-stage compression refrigeration cycle has a predetermined value. In this embodiment, the predetermined value of the intermediate pressure is the intermediate pressure value (PM) at which the ratio between the second pressure ratio (PM/PL) of the low-pressure stage compressor **(21)** and the first pressure ratio (PH/PM) of the high-pressure stage compressor **(31)** is 1:1. In other words, the intermediate pressure value (PM) is the geometric mean {(PL·PH)^{1/2}}of the suction pressure (PL) of the low-pressure stage compressor **(21)** and the discharge pressure (PH) of the high-pressure stage compressor **(31).**

Specifically, as shown in Figure **9(b)****,** the second control section **(102)** calculates the first pressure ratio (PH/PM) of the high-pressure stage compressor **(31)** in a first dividing circuit **(162)** and then calculates the second pressure ratio (PM/PL) of the low-pressure stage compressor **(21)** in a second dividing circuit **(163).** Then, the second control section **(102)** calculates the pressure difference {(PH/PM)-(PM/PL)} between the first pressure ratio (PH/PM) and the second pressure ratio (PM/PL) in a comparison circuit **(164)** and derives a gain K from the pressure difference in a gain circuit **(165).** Then, the second control section **(102)** derives, in a derivation circuit **(166),** a target operating frequency of the low-pressure stage compressor **(21)** by multiplying the current operating frequency of the low-pressure stage compressor **(21)** by the gain K and controls the low-pressure stage compressor **(21)** so that it is driven at the target operating frequency.

Then, by repeating the above controls of the first control section **(101)** and second control section **(102),** the operating frequencies of the high-pressure stage compressor **(31)** and low-pressure stage compressor **(21)** become operating frequencies appropriate to the refrigeration load and providing the highest COP.

At startup of the cooling operation in the two-stage compression refrigeration cycle, the third control section **(103)** controls, instead of the second control section **(102),** the operating frequency of the low-pressure stage compressor **(21).** Specifically, the third control section **(103)** controls the low-pressure stage compressor **(21)** so that its operating frequency is n times (for example, n=1.3) as high as that of the high-pressure stage compressor **(31).** The reason for this is as follows: In order to bring the intermediate pressure to the predetermined value, the second control section **(102)** makes a feedback control of changing the operating frequency of the low-pressure stage compressor **(21)** following the change in the operating frequency of the high-pressure stage compressor **(31)** controlled by the first control section **(101).** If, at startup, the second control section **(102)** controls the low-pressure stage compressor **(21),** a delay due to the feedback control occurs so that it takes a long time to reach a predetermined operating power. This problem must be prevented.

### - Effects of Embodiment 2-

According to this embodiment, since during the cooling operation in the two-stage compression refrigeration cycle the first control section **(101)** controls the operating frequency of the high-pressure stage compressor **(31)** to adapt to the load of the refrigeration capacity and the second control section **(102)** controls the operating frequency of the low-pressure stage compressor **(21)** so that the ratio between the first pressure ratio (PH/PM) of the high-pressure stage compressor **(31)** and the second pressure ratio (PM/PL) of the low-pressure stage compressor **(21)** is 1:1, the refrigeration system **(120)** can perform an operation appropriate to the load of the refrigeration capacity and can enhance the COP. Therefore, the refrigeration system **(120)** can perform an operation appropriate to the operating conditions.

Furthermore, according to this embodiment, the first control section **(101)** provides an operating power control according to the refrigeration load not only by controlling the operating frequency of the high-pressure stage compressor **(31)** during operation in the single-stage compression refrigeration cycle with the existing outdoor unit **(20)** and indoor unit **(40)** connected to each other, but also by controlling the operating frequency of the high-pressure stage compressor **(31)** through the application of the above operating power control during operation in the two-stage compression refrigeration cycle with the existing units connected to the option unit **(30).** This simplifies the configuration of the control means.

Furthermore, since at startup the third control section **(103)** controls, instead of the second control section **(102),** the operating frequency of the low-pressure stage compressor **(21),** this prevents a delay in control on the low-pressure stage compressor **(21)** from being caused by feedback control of the second control section **(102)** at startup and thereby promptly provides an operation adapted to the refrigeration load.

The rests of the configuration and operational behavior and the other effects are the same as in Embodiment 1.

### <<Other Embodiments>>

The above embodiments may have the following configurations.

Although in the above embodiments the refrigerant circuit **(15)** is formed by connecting an option unit **(30)** between the outdoor unit **(20)** and the indoor unit **(40),** the option unit **(30)** and the outdoor unit **(20)** may not necessarily be separate units but may be formed as an integrated outdoor unit.

The configuration of the refrigerant circuit **(15)** in each embodiment is not particularly limited. For example, each compression mechanism may not necessarily be composed of a single compressor but may be composed of a plurality of parallel-connected compressors. Furthermore, a solenoid valve may be disposed instead of the option side expansion valve **(34)** in Embodiment 1 and, during a heating operation in a two-stage compression refrigeration cycle, the refrigerant may be reduced to an intermediate pressure only by the outdoor expansion valve **(42)** with the solenoid valve fully opened.

The refrigeration system according to the present invention may be applied to a chilling unit. In this case, for example, a plate heat exchanger for cooling and heating water is provided instead of the indoor heat exchanger in each embodiment.

The above embodiments are merely preferred embodiments in nature and are not intended to limit the scope, applications and use of the invention.

### Industrial Applicability

As can be seen from the above description, the present invention is useful for control on the operating capacities of two compression mechanisms in a refrigeration system including a refrigerant circuit that includes the two compression mechanisms and operates in a two-stage compression refrigeration cycle.

## Claims

1. A refrigeration system that includes a refrigerant circuit **(15)** including a first compression mechanism **(21, 31)** variable in displacement and a second compression mechanism **(31, 21)** variable in displacement and operates in a two-stage compression refrigeration cycle, the refrigeration system further including:
a first control means **(101)** for increasing and decreasing the operating capacity of the first compression mechanism **(21, 31)** to adapt to the load of the refrigeration capacity; and
a second control means **(102)** for increasing and decreasing the operating capacity of the second compression mechanism **(31, 21)** so that the intermediate pressure in the two-stage compression refrigeration cycle has a predetermined value.

2. The refrigeration system of claim 1, wherein the second control means **(102)** controls the operating capacity of the second compression mechanism **(31, 21)** so that the ratio between a first pressure ratio, which is the ratio of the discharge pressure of the first compression mechanism **(21, 31)** to the suction pressure thereof, and a second pressure ratio, which is the ratio of the discharge pressure of the second compression mechanism **(31, 21)** to the suction pressure thereof, is 1:1.

3. The refrigeration system of claim 1, further including a third control means **(103)** that, at startup, controls the operating capacity of the second compression mechanism **(31, 21)** instead of the second control means **(102)** so that the second compression mechanism **(31, 21)** has a predetermined target operating capacity derived based on the operating capacity of the first compression mechanism **(21, 31).**

4. The refrigeration system of claim 1,
wherein during a heating operation, the first compression mechanism **(21, 31)** comprises a low-pressure stage compression mechanism **(21)** and the second compression mechanism **(31, 21)** comprises a high-pressure stage compression mechanism **(31),** and
wherein during the heating operation, the first control means **(101)** controls the operating capacity of the low-pressure stage compression mechanism **(21)** so that the discharge pressure of the high-pressure stage compression mechanism **(31)** has a predetermined target value while the second control means **(102)** controls the operating capacity of the high-pressure stage compression mechanism **(31)** so that the intermediate pressure has a predetermined value.

5. The refrigeration system of claim 1,
wherein during a cooling operation, the first compression mechanism **(21, 31)** comprises a high-pressure stage compression mechanism and the second compression mechanism **(31, 21)** comprises a low-pressure stage compression mechanism, and
wherein during the cooling operation, the first control means **(101)** controls the operating capacity of the high-pressure stage compression mechanism **(31)** so that the discharge pressure of the low-pressure stage compression mechanism **(21)** has a predetermined target value while the second control means **(102)** controls the operating capacity of the low-pressure stage compression mechanism **(21)** so that the intermediate pressure has a predetermined value.

6. The refrigeration system of claim 1, wherein the first compression mechanism **(21, 31)** and the second compression mechanism **(31, 21)** are inverter-controlled.
